# EUROPEAN PATENT SPECIFICATION

(11) **EP 3 711 477 B1**
(45) Date of publication and mention of the grant of the patent: **17.07.2024**
(21) Application number: 18876180.3
(22) Date of filing: 08.11.2018
(51) Int. Cl.: A01G 31/02, A01G 31/06

(54) **HYDROPONICS APPARATUS AND HYDROPONICS METHOD**
HYDROKULTURVORRICHTUNG UND HYDROKULTURVERFAHREN
APPAREIL D'HYDROPONIE ET PROCÉDÉ D'HYDROPONIE

(30) Priority: 13.11.2017 JP 2017218319
(43) Date of publication of application: 23.09.2020
(73) Proprietor: Toppan Printing Co., Ltd., Tokyo 110-0016 (JP)
(72) Inventor: SUTO, Toru, Tokyo 110-0016 (JP)
(74) Representative: Plasseraud IP
(86) International application number: PCT/JP2018/041447
(87) International publication number: WO 2019/093410

(56) References cited:
- EP-A1- 3 045 036
- EP-A1- 3 050 429
- EP-A1- 3 189 727
- JP-A- 2007 061 002
- JP-A- 2015 065 828
- JP-A- 2015 139 410
- JP-A- 2017 029 144
- JP-A- 2017 029 144
- JP-A- H04 258 231
- JP-U- H0 494 960
- US-A1- 2017 265 409

## Description

### [Technical Field]

The present invention relates to a hydroponics device and a hydroponics method.

### [Background Art]

As disclosed in PTL 1, some cultivation systems have been proposed for hydroponics of root vegetables. Such cultivation systems include, as main elements, a delivery and supply channel, a discharge channel and a plurality of cultivation containers. The delivery and supply channel supplies a nutrient solution from a main mixing tank and a treated nutrient solution using pipes to the plurality of cultivation containers. The discharge channel recovers waste liquid from the cultivation containers for supply to a waste liquid treatment device. The plurality of cultivation containers each hold the nutrient solution supplied through the delivery and supply channel, and each independently grow plants which are a predetermined number of different strains of the same species. The plurality of cultivation containers each have a body a part of which is provided with an extensible bellows throughout the circumference to serve as a liquid level control means that controls a liquid level according the growth of the plants. Thus, the lower part of each cultivation container can be extended downward according to the growth of the plants, so that a predetermined quantity of nutrient solution can be held in the cultivation container. Such cultivation containers are each controlled in height while the growth of the plants is observed in one common container. Thus, root vegetables can be grown while the roots are permitted to dilate in one common container.

### [Citation List]

### [Patent Literature]

PTL 1: JP 2017-29144 A

### [Summary of the Invention]

The cultivation systems as disclosed in PTL 1 involve tasks of extending the lower parts of the cultivation containers downward according to the growth of the plants and use of a liquid level control means. Therefore, it has been difficult to install multistage cultivation shelves in such cultivation systems. For this reason, it has not been easy to increase productivity per unit area in these cultivation systems. In addition, in such cultivation systems, the height of each cultivation container is controlled while the growth of the plants is observed in one common container, so that root vegetables can be grown while the roots are permitted to dilate therein. Therefore, when a plurality of such cultivation containers are used, a large quantity of nutrient solution has been required.

Prior art document EP-A1-3.050.429 discloses the preamble of claim 1.

Considering the issues as set forth above, the present invention aims to provide a hydroponics device and a hydroponics method which can increase productivity per unit area in hydroponics and decrease the amount of a required nutrient solution to reduce cost involved in running the device.

The invention is defined in the appended claims.

In the present description and drawings, any examples and technical descriptions of apparatuses, products and/or methods which are not covered by the claims should be taken as background art or examples useful for understanding the invention.

According to the hydroponics device and the hydroponics method of the present invention, there are provided a nutrient solution reservoir container into which a nutrient solution in a nutrient solution storage is supplied, and a cover that supports a plurality of plants to be cultivated, the cover being fixed spaced from a liquid surface of the nutrient solution in the nutrient solution reservoir container, with a predetermined distance being ensured between the cover and the liquid surface. The plants supported by the cover respectively have taproots which are longer than the lengths of shoots of the plants, the taproots having respective tips only immersed in the nutrient solution in the nutrient solution reservoir container. This eliminates the necessity of using a liquid level control mechanism for controlling a liquid level according to the growth of the roots, increases productivity per unit area in hydroponics, and decreases the amount of nutrient solution required, to reduce cost involved in running the device.

### [Brief Description of the Drawings]

Fig. 1A is a diagram illustrating processes of cultivating plant seedlings used in several examples of a hydroponics device according to the present invention.
Fig. 1B is a schematic diagram illustrating containers and plants, the containers being used for the respective processes of cultivating the plants.
Fig. 2 is a schematic diagram illustrating a configuration of a first example of the hydroponics device according to the present invention.
Fig. 3A is a diagram illustrating growth of plants.
Fig. 3B is a diagram illustrating growth of plants.
Fig. 4 is a diagram illustrating a circulation path of a nutrient solution together with plants in the case where the pan used in the example shown in Fig. 2 is applied to cultivation of plants of a different species.
Fig. 5 is a schematic diagram illustrating a configuration of a second example of the hydroponics device according to the present invention.
Fig. 6A is a schematic diagram illustrating a configuration of a third example of the hydroponics device according to the present invention.
Fig. 6B is a diagram illustrating growth of plants.
Fig. 6C is a diagram illustrating growth of plants.
Fig. 7A is a diagram illustrating processes of cultivating plant seedlings used in several examples of the hydroponics device according to the present invention.
Fig. 7B is a schematic diagram illustrating a plurality of sponges (e.g., urethane sponges held in artificial culture medium plates or the like) in a single container used for cultivating the plants.

### [Description of the Embodiments]

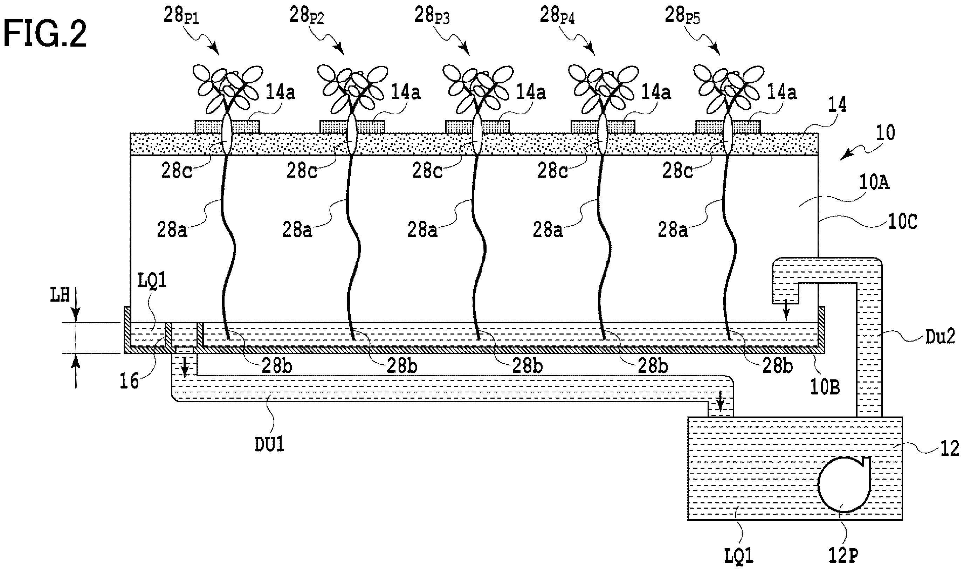

Fig. 2 is a schematic diagram illustrating a first example of a hydroponics device according to the present invention.

For example, solar plant factories or closed plant factories using artificial light are equipped with multistage cultivation shelves (not shown) on which a plurality of hydroponics devices are arranged. Fig. 2 shows one representative hydroponics device.

As main components, the hydroponics device includes, for example, a tank 12, a pump 12P, a nutrient solution reservoir container (also termed pan hereinafter) 10B, a cover 14 and a cover support 10C. The tank 12 stores a nutrient solution LQ1 that is a liquid fertilizer whose concentration has been adjusted to a predetermined level. The pump 12P is disposed in the tank 12 and supplies the nutrient solution LQ1 in the tank 12 to a supply path Du2 described later. The pan 10B forms a lower part of a cultivation planter, which will be described later, and holds a predetermined quantity of the nutrient solution LQ1. The cover 14 forms an upper part of the cultivation planter 10. The cover support 10C supports the cover 14 from beneath the cover 14 and is detachably connected to the pan 10B.

Fig. 2 shows plants 28_{P1}, 28_{P2}, 28_{P3}, 28_{P4} and 28_{P5} as representative of a plurality of plants 28_{P1} to 28_{Pn}. For example, the plants 28_{P1}, 28_{P2}, 28_{P3}, 28_{P4}, 28_{P5} ... may be root vegetables which are a predetermined number of strains such as of carrots, ginseng (Korean ginseng), licorice, coptis, angelica acutiloba (herbal medicines), yam, turnips, burdock and Japanese radishes.

The cover 14 supports the plants 28_{P1}, 28_{P2}, 28_{P3}, 28_{P4}, 28_{P5} ... and 28_{Pn}, which are a predetermined number of different strains of the same species, via respective plant fixing stoppers 14a serving as pads, which will be described later, so that tips (portions respectively including rootcaps and apical meristems) 28b of respective taproots 28a of the plants are immersed in the nutrient solution LQ1 in the pan 10B. For example, as shown in PTL 1, the plant fixing stoppers 14a are arranged at positions corresponding to openings of the cover 14. The plurality of openings of the cover 14 are formed in a matrix at predetermined intervals. For example, as shown in PTL 1, the plant fixing stoppers 14a each include, on the inside thereof, a seal holder in which a plurality of sealing members are held being overlaid with each other. The plant fixing stoppers 14a may be members, such as urethane sponge mats, having flexibility and stretchability. Thus, shoots 28c of the plants 28_{P1}, 28_{P2}, 28_{P3}, 28_{P4} and 28_{P5} can be supported in the cover 14 by the respective plant fixing stoppers 14a.

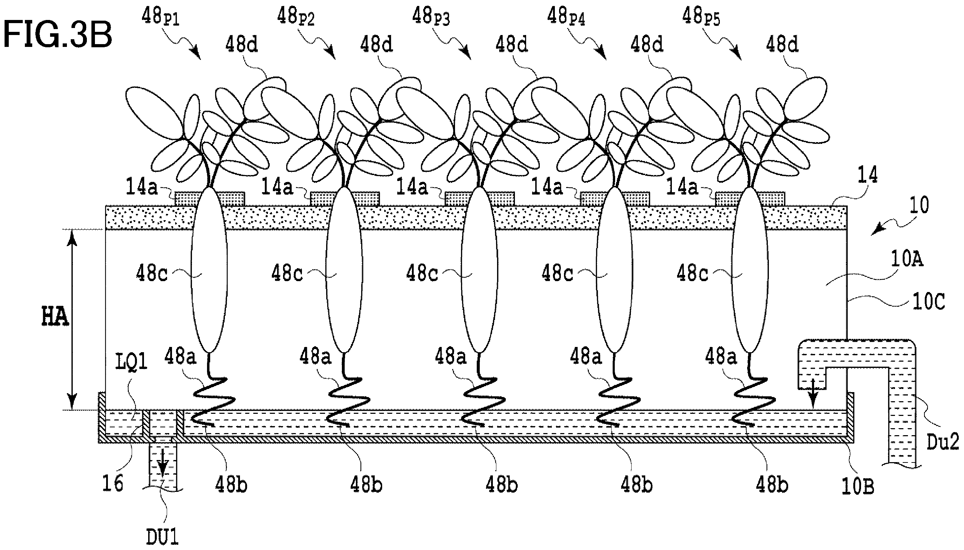

As shown in Fig. 3B, the cover support 10C has a growth space 10A on the inside thereof for holding dilating portions 48c in the roots of grown plants 48_{P1}, 48_{P2}, 48_{P3}, 48_{P4} and 48_{P5}. For example, the growth space (air layer) 10A has a height HA exceeding the length in the elongation growth direction of the dilating portions 48c in the roots of the grown plants 48_{P1}, 48_{P2}, 48_{P3}, 48_{P4} and 48_{P5} at the time of harvest. For example, in the case of Japanese radishes, the height HA is set to 50 cm or more. It should be noted that, without being limited to the example mentioned above, the height HA may be set to a predetermined height of less than 50 cm depending on the lengths in the elongation growth direction of the dilating portions in the roots of grown plants of different species at the time of harvest. For example, in the case of carrots, the height HA may be set to a value in the range of about 20 cm or more and 30 cm or less.

The height HA does not necessarily have to be fixed to a predetermined value during growth of the plants. For example, there would be no problem as long as the cultivation planter 10 has a mechanism enabling stepwise or stepless adjustment in height of the space, where the liquid level of the nutrient solution LQ1 is sustained and the bases of the seedlings are held, according to the growth of the taproots of long roots.

Green algae may develop in a tank or in a moist place around the tank. If algae have developed in the nutrient solution, removal of the algae may not be easy, and nutrients in the solution may be consumed by the algae. In addition, from a hygiene perspective, a nutrient solution that has developed algae may be a source of various bacteria. In this case, the air layer 10Abetween the cover 14 and the nutrient solution reservoir container 10B may be enclosed by a sheet, e.g., a transparent or translucent sheet, or a light-shielding sheet or the like. Since water and nutrients reside in the nutrient solution, algae may not develop if the sheet can prevent entry of algae from outside or can shield against light. Furthermore, the sheet enclosing the air layer may ensure a stable environment of exerting an effect of reducing variation in temperature or humidity, resultantly ensuring a stable cultivation environment.

In the tank 12 as a nutrient solution storage, the nutrient solution LQ1 is stored with a predetermined liquid level sustained. In the tank 12, there is provided the pump 12P having a discharge port that is connected to an end of the supply path Du2. The pump 12P is controlled by a control unit, not shown. Thus, when the pump 12P is activated, the nutrient solution LQ1 in the tank 12 is supplied to a reservoir in the pan 10B, which will be described later, through the supply path Du2. Thus, when the pump 12P is activated, the nutrient solution LQ1 in the tank 12 is circulated via the supply path Du2 and a return discharge path Du1.

As shown in Fig. 2, the pan 10B has a reservoir in the interior for holding a predetermined quantity of the nutrient solution LQ1 supplied from the tank 12 via the supply path Du2. The reservoir has a top that is open to the growth space 10A mentioned above. The other end of the supply path Du2 is open to the liquid surface of the nutrient solution LQ1 in the reservoir. In the nutrient solution LQ1 in the reservoir of the pan 10B, an open end of a discharge pipe 16 protrudes by a predetermined length. The open end of the discharge pipe 16 serving as a liquid level control means has a protrusion length which is set, for example, to about 3 cm. If the liquid level of the nutrient solution LQ1 rises, the nutrient solution LQ1 is discharged to the return discharge path Du1, which is ensured to communicate with the tank 12, via the discharge pipe 16. Therefore, the liquid level of the nutrient solution LQ1 is controlled to a predetermined liquid level LH corresponding to the predetermined length of the taproots 28a of the plants.

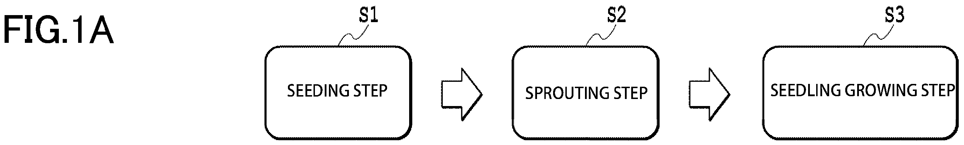

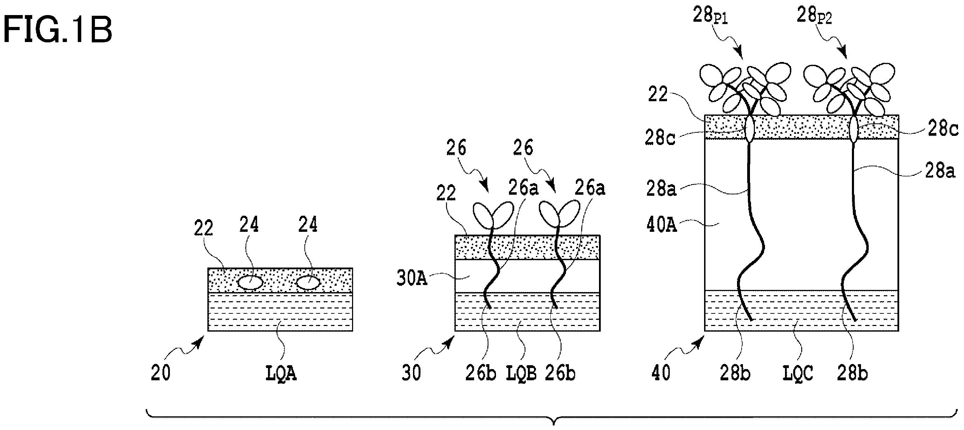

As shown in Fig. 1A, the plants 28_{P1}, 28_{P2}, 28_{P3}, 28_{P4}, 28_{P5} ... and 28_{Pn} as seedlings having comparatively long taproots are obtained through steps, i.e., a seeding step S1, a sprouting step S2 and a seedling growing step S3, performed sequentially. As shown in Fig. 1B, in the seeding step S1, a plurality of seeds 24 are sown on a sponge (e.g., a urethane sponge held in an artificial culture medium plate or the like) 22, for example, which is floated on the surface of a nutrient solution LQA filled in a container 20. Next, in the sprouting step S2, the seeds 24 are permitted to sprout and grow into seedlings 26. When taproots 26a of the seedlings 26 have grown to a predetermined length, the seedlings 26 are replanted in a container 30 filled with a predetermined quantity of a nutrient solution LQB. The container 30 is ensured to have a depth larger than that of the container 20. In this case, the positions of the tips 26b of the taproots 26 of the grown seedlings 26 relative to the surface of the nutrient solution LQB are determined so that only the tips 26b are immersed in the nutrient solution LQB. Specifically, the positions of the tips 26b of the taproots 26a of the seedlings 26 relative to the surface of the nutrient solution LQB are determined such that the taproots 26a are held in a state in which they can sufficiently absorb the nutrient solution LQB. An air layer 30A is formed above the surface of the nutrient solution LQB.

Subsequently, in the seedling growing step S3, the seedlings 26 grown in the sponge 22 (or a foamed polystyrene plate) of the container 30 are replanted to a container 40 having a larger depth than the container 30. Specifically, when the seedlings 26 have grown to seedlings (also termed plants hereinafter) 28_{P1} and 28_{P2} having taproots 28a with a predetermined length that is larger than the length of the taproots 26a, the seedlings 28_{P1} and 28_{P2} are replanted in the container 40 together with the sponge 22. In this case, the positions of the tips 28b of the taproots 28a of the seedlings 28 relative to the surface of a nutrient solution LQC are determined so that only the tips 28b are immersed in the nutrient solution LQC. Specifically, the positions of the tips 28b of the taproots 28a of the seedlings 28 relative to the surface of the nutrient solution LQC are determined such that the taproots 28a are held in a state in which they can sufficiently absorb the nutrient solution LQC. It should be noted that, in Fig. 1B, the seedlings 28_{P1} and 28_{P2} are shown as representatives of the plurality of seedlings.

The positional relationship between the tips 28b of the taproots 28a of the seedlings 28_{P1} and 28_{P2}, and the surface of the nutrient solution LQC is controlled according to the growth of the taproots 28a of the seedlings 28_{P1} and 28_{P2}. Thus, shoots 28c are formed in portions of the respective seedlings 28_{P1} and 28_{P2} supported by the sponge 22. The taproots 28a of the seedlings 28_{P1} and 28_{P2} have an average diameter which is ensured to be, for example, in the range of about 2 mm or more to 10 mm or less. In the steps of growing long-root seedlings by using containers of different sizes (depths), the number of cultivation containers may be appropriately combined with the number of different sizes of cultivation containers according to the species to be cultivated. In the cultivation planter 10 shown in Fig. 2, plants having about 50-cm dilating portions in the roots may be harvested, as will be described later, by using the seedlings 28_{P1} and 28_{P2}.

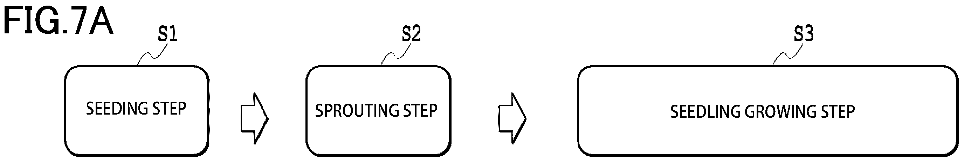

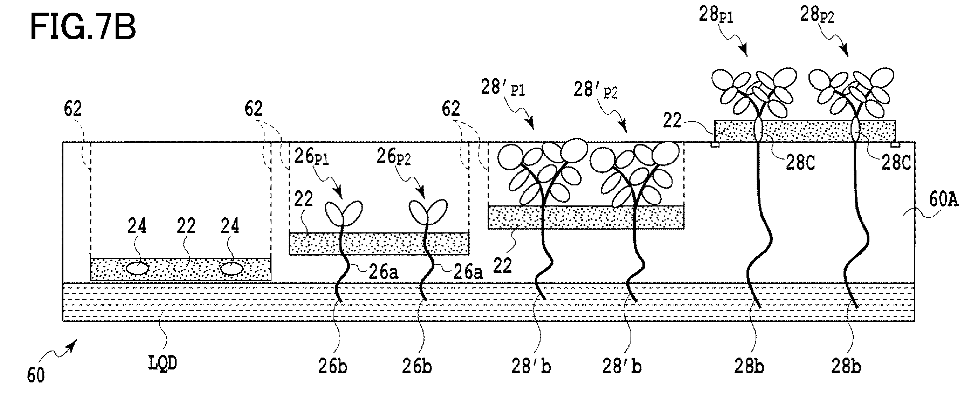

To obtain the plants 28_{P1}, 28_{P2}, 28_{P3}, 28_{P4}, 28_{P5} ... and 28_{Pn} as seedlings having comparatively long taproots, containers of different sizes have been used in the example described above to grow seedlings having comparatively long taproots. However, without being limited to this example, seedlings having long taproots may be cultivated, for example, by using one uniformly shaped cultivation container where the liquid level of the nutrient solution is kept at a predetermined level. Specifically, in this container, a plurality of artificial culture media (sponges or polystyrene foam plates) may be individually pulled upward according to the growth of the taproots, so that only tips of the taproots are immersed in the nutrient solution. In this case, as shown in Fig. 7A, for example, the plants 28_{P1}, 28_{P2} and the like are obtained through a sequentially performed seeding step S1, sprouting step S2 and seedling growing step S3. It should be noted that, in Fig. 7B, seedlings 28'_{P1} and 28'_{P2}, and seedlings 28_{P1} and 28_{P2} are shown as representatives of the plurality of seedlings.

In the seeding step S1, a plurality of seeds 24 are sown on a first sponge 22, for example, floated on the left end surface of a nutrient solution LQD having a predetermined concentration and filled in a container 60. Next, in the sprouting step S2, the seeds 24 are permitted to sprout and grow into seedlings 26. When taproots 26a of the seedlings 26 have grown to a predetermined length, only the sprouted seedlings 26 are replanted in a second sponge 22 arranged on the liquid surface adjacent to or on the right of the first sponge as viewed in Fig. 7B. The sponges 22 shown in Fig. 7B each have four corners which are connected to wires 62 that are wound about and hooked on an elevating mechanism (not shown). Thus, the distance between each sponge 22 and the surface of the nutrient solution LQD can be controlled by operating the elevating mechanism.

In this case, the positions of the tips 26b of the taproots 26 of the seedlings 26 relative to the surface of the nutrient solution LQD are determined so that only the tips 26b are immersed in the nutrient solution LQD. Specifically, the positions of the tips 26b of the taproots 26a of the seedlings 26 relative to the surface of the nutrient solution LQD are determined such that the taproots 26a are held in a state in which they can sufficiently absorb the nutrient solution LQD. An air layer 60A is formed above the surface of the nutrient solution LQD.

Subsequently, in the seedling growing step S3, the seedlings 26 grown in the second sponge 22 (or a polystyrene foam plate) are elevated up to a predetermined level by the elevating mechanism. Specifically, when the seedlings 26 have grown to seedlings (also termed plants hereinafter) 28'_{P1} and 28'_{P2} having taproots 28'a with a predetermined length that is larger than the length of the taproots 26a, the second sponge 22 is elevated up to a predetermined level by the elevating mechanism together with the seedlings 28'_{P1} and 28'_{P2} according to the growth of the taproots 28'a. In this case, the positions of tips 28'b of the taproots 28'a relative to the surface of the nutrient solution LQD are determined so that only the tips 28'b are immersed in the nutrient solution LQD. Specifically, the positions of the tips 28'b of the taproots 28'a relative to the surface of the nutrient solution LQD are determined such that the taproots 28'a are held in a state in which they can sufficiently absorb the nutrient solution LQC. Then, the second sponge 22 is elevated up to a maximum level by the elevating mechanism according to the growth of the taproots 28a of the respective seedlings 28_{P1} and 28_{P2} which have grown even more than the seedlings 28'_{P1} and 28'_{P2}. In this case, the positions of the tips 28b of the taproots 28a of the seedlings 28_{P1} and 28_{P2} relative to the surface of the nutrient solution LQD are determined so that only the tips 28b are immersed in the nutrient solution LQD. Thus, as in the above example, shoots 28c are formed in portions of the respective seedlings 28_{P1} and 28_{P2} supported by the second sponge 22.

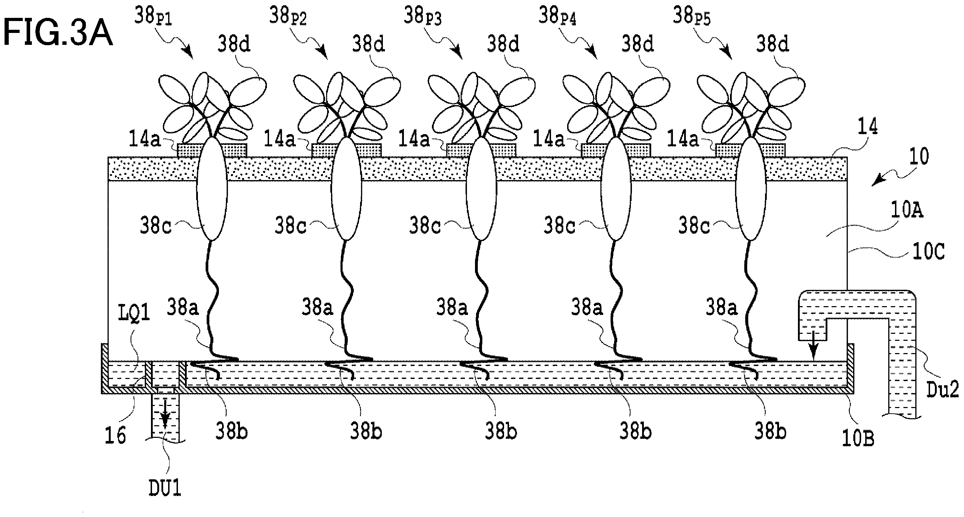

With this configuration, the plants 28_{P1}, 28_{P2}, 28_{P3}, 28_{P4}, 28_{P5} ... and 28_{Pn} arranged in the cultivation planter 10 gradually grow. With the growth, as shown in Fig. 3A, dilating portions 38c in the roots grow more than the shoots 28c. This growth is considered to be due to drought stress in the growth space (air layer) 10A.

It should be noted that, in Figs. 3A and 3B, like reference signs indicate like components of the cultivation planter 10 shown in Fig. 2 to omit duplicate explanation.

Plants 38_{P1}, 38_{P2}, 38_{P3}, 38_{P4}, 38_{P5} ... and 38_{Pn} have grown leaves 38d above the dilating portions 38c in the roots and elongated taproots 38a below the dilating portions 38c in the roots. Tips 38b of the taproots 38a are immersed in the nutrient solution LQ1. Specifically, positions of the tips 38b of the taproots 38a of the seedlings 38 relative to the surface of the nutrient solution LQ1 are determined such that the taproots 38a are held in a state in which they can sufficiently absorb the nutrient solution LQ1.

The plants 38_{P1}, 38_{P2}, 38_{P3}, 38_{P4}, 38_{P5} ... and 38_{Pn}, when they have grown even more and are going to be harvested, will have dilating portions 48c in the roots, as shown in Fig. 3B, with diameters and lengths which are larger than those of the dilating portions 38c in the roots mentioned above. Plants 48_{P1}, 48_{P2}, 48_{P3}, 48_{P4}, 48_{P5} ... and 48_{Pn} have grown leaves 48d above the dilating portions 38c in the roots and elongated taproots 48a below the dilating portions 48c of the roots. Tips 48b of the taproots 48a are immersed in the nutrient solution LQ1. Specifically, positions of the tips 48b of the taproots 48a of the seedlings 48 relative to the surface of the nutrient solution LQ1 are determined such that the taproots 48a are held in a state in which they can sufficiently absorb the nutrient solution LQ1.

It has been considered that, when hydroponically growing root vegetables in a large cultivation tank, the liquid depth is required to be not less than the length of each root (50 cm in the case of Japanese radishes). Also, it has been considered that it is a limit, at best, to dilate a part of a root or to make a deformed dilating portion in a root and that it is impossible to stably cultivate long and thick roots. Soil cultivation allows roots to grow in length and thickness and mature into long and thick roots. Soil cultivation enables delicately balanced growth between elongation and thickening.

The inventor of the present invention has found that it is difficult to maintain the delicate balance in growth between elongation and thickening in hydroponics, as described above, due to the tight tolerances.

In this regard, the inventor of the present invention has considered that, if growth cannot be balanced between elongation and thickening, these two growth functions may be separately achieved in cultivation to eliminate the necessity of achieving balance therebetween, and that this separate growth may allow roots to grow normally. A specific example of a hydroponics method according to the present invention is a cultivation method in which thin and long roots are grown first and then the elongated roots are thickened. In the cultivation process, the two growth functions were offset in time from each other to separate elongation growth from thickening growth. When cultivation experiments were conducted according to the example of the hydroponics method of the present invention, a large amount of Japanese radishes (a root vegetable) of good quality with long and thick roots was successfully harvested.

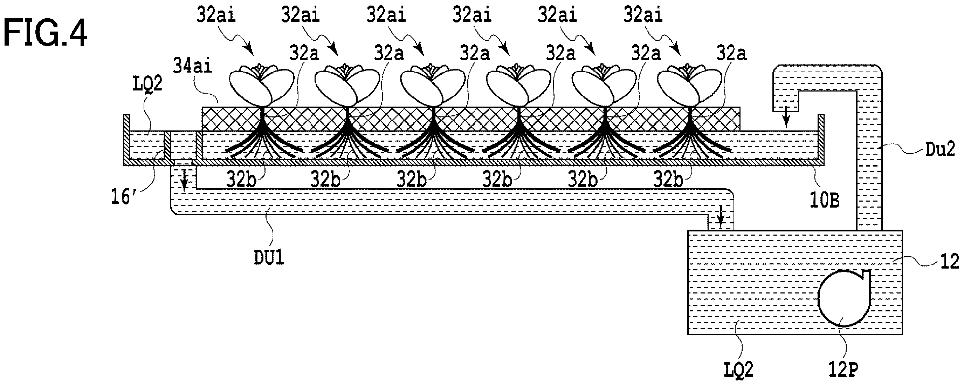

The plants 28_{P1}, 28_{P2}, 28_{P3}, 28_{P4}, 28_{P5} ... to be cultivated in the cultivation planter 10 described above have been root vegetables as an example. However, without being limited to this example, as shown in Fig. 4, for example, a plurality of plants 32ai (i=1 to n where n is a positive integer) to be cultivated may be leafy vegetables which are a predetermined number of strains such as of lettuce. It should be noted that, in Fig. 4, like reference signs indicate like components of the cultivation planter 10 shown in Fig. 2 to omit duplicate explanation.

When cultivating leafy vegetables, the cover 14 and the cover support 10C are detached from the pan 10B which is filled with a nutrient solution LQ2 having the same concentration as or different concentration from the nutrient solution LQ1. The plurality of plants 32ai having stalks are planted in a support plate 32ai (i=1 to n where n is a positive integer) which is made of polystyrene foam and floated on the surface of the nutrient solution LQ2 in the pan 10B. Thus, root vegetables or leafy vegetables can be cultivated by using a common cultivation planter 10.

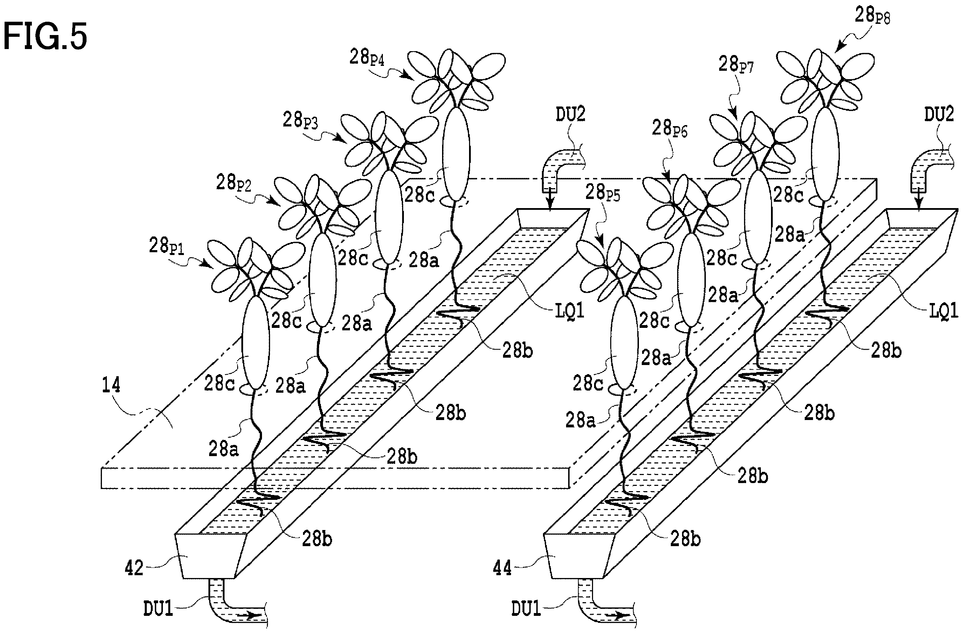

Fig. 5 is a schematic diagram illustrating a second example of the hydroponics device according to the present invention.

In the example shown in Fig. 2, a predetermined quantity of nutrient solution LQ1 has been filled in the pan 10B. Instead, in the example shown in Fig. 5, the hydroponics device includes a delivery channel 42 and a delivery channel 44. The delivery channel 42 is provided for taproots 28a of a group of plants 28_{P1}, 28_{P2}, 28_{P3} and 28_{P4} and holds a predetermined quantity of the nutrient solution LQ1. The delivery channel 44 is provided for taproots 28a of a group of plants 28_{P5}, 28_{P6}, 28_{P7} and 28_{P5} and holds a predetermined quantity of the nutrient solution LQ1.

It should be noted that, in Fig. 5, like reference signs indicate like components in the example shown in Fig. 2 to omit duplicate explanation. Although not shown, the hydroponics device shown in Fig. 5 includes the cover support 10C, the tank 12 and the pump 12P provided to the example shown in Fig. 2.

For example, solar plant factories or closed plant factories using artificial light are equipped with multistage cultivation shelves (not shown) on which a plurality of hydroponics devices are arranged. Fig. 5 shows one representative hydroponics device.

Since the delivery channels 42 and 44 have the same structure, the following description mainly explains the delivery channel 42 and omits explanation of the delivery channel 44.

The delivery channel 42, which is shaped like a gutter, has an interior as a reservoir for holding a predetermined quantity of the nutrient solution LQ1 supplied from the tank 12 via the supply path Du2. The reservoir has a top that is open to the growth space 10A mentioned above. The other end of the supply path Du2 is open to the liquid surface of the nutrient solution LQ1 in the reservoir. In the nutrient solution LQ1 in the reservoir of the delivery channel 42, an open end of a discharge pipe (not shown) protrudes by a predetermined length. The open end of the discharge pipe serving as a liquid level control means has a protrusion length which is set, for example, to about 3 cm. If the liquid level of the nutrient solution LQ1 rises, the nutrient solution LQ1 is discharged to the return discharge path Du1, which is ensured to communicate with the tank 12, via the discharge pipe. Therefore, the liquid level of the nutrient solution LQ1 is controlled to a predetermined liquid level LH corresponding to the predetermined length of the taproots 28a of the plants.

With this configuration as well, the plants 28_{P1}, 28_{P2}, 28_{P3}, 28_{P4}, 28_{P5} ... and 28_{Pn} can be grown. Moreover, this configuration can reduce the quantity of the nutrient solution LQ1 circulated in the delivery channels 42 and 44 compared to the quantity of the nutrient solution LQ1 circulated in the pan 10B shown in Fig. 2. Thus, the quantity of the nutrient solution LQ1 used can be reduced.

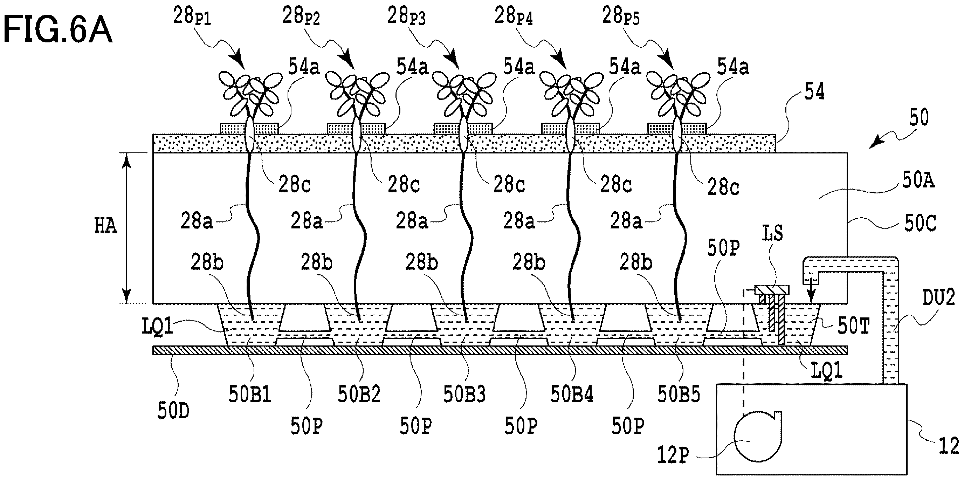

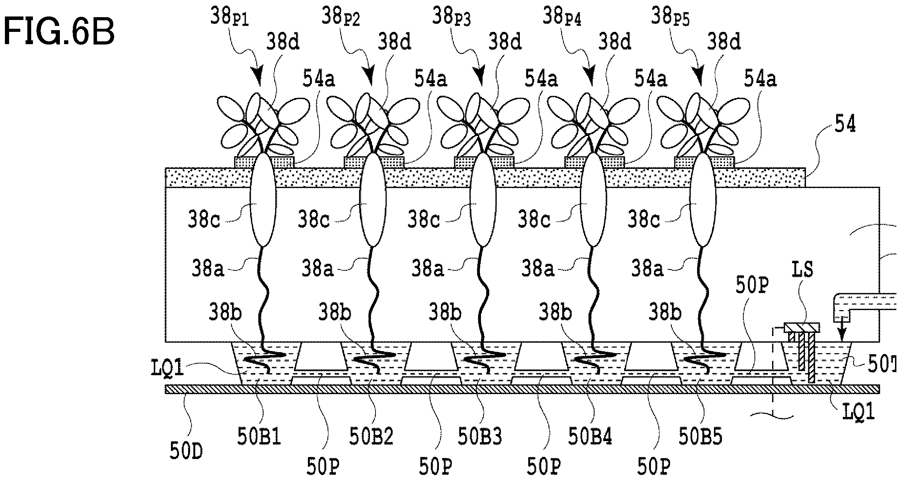

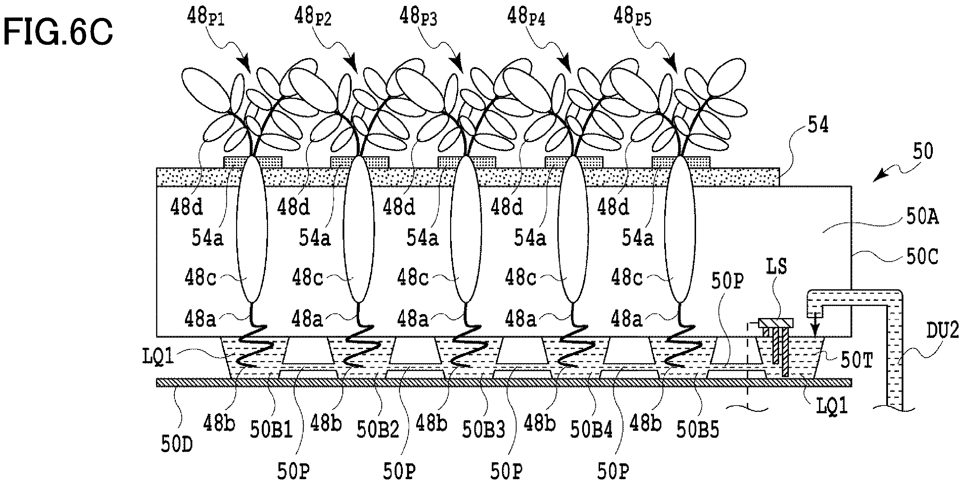

Figs. 6A, 6B and 6C are schematic diagrams each illustrating a third example of the hydroponics device according to the present invention.

In the example shown in Fig. 2, a predetermined quantity of the nutrient solution LQ1 has been filled in the pan 10B. Instead, in the example shown in Fig. 6A, the hydroponics device includes cultivation containers 50B1, 50B2, 50B3, 50B4 and 50B5 filled with a predetermined quantity of the nutrient solution LQ1 and respectively provided for taproots 28a of the plants 28_{P1}, 28_{P2}, 28_{P3}, 28_{P4}, 28_{P4} and 28_{P5}.

It should be noted that, in Fig. 6A, like reference signs indicate like components in the example shown in Fig. 2 to omit duplicate explanation.

For example, solar plant factories or closed plant factories using artificial light are equipped with multistage cultivation shelves (not shown) on which a plurality of hydroponics devices are arranged. Fig. 6A shows one representative hydroponics device.

As main components, the hydroponics device includes, for example, a tank 12, a pump 12P, a support table 50D, cultivation containers 50B1, 50B2, 50B3, 50B4 and 50B5, a cover 54, and a cover support 50C. The tank 12 stores a nutrient solution LQ1 that is a liquid fertilizer whose concentration has been adjusted to a predetermined level. The pump 12P is disposed in the tank 12 and supplies the nutrient solution LQ1 in the tank 12 to a supply path Du2 described later. The support table 50D forms a lower part of a cultivation planter 50. The cultivation containers 50B1, 50B2, 50B3, 50B4 and 50B5 are supported by the support table 50D and hold a predetermined quantity of the nutrient solution LQ1. The cover 54 forms an upper part of the cultivation planter 50. The cover support 50C supports the cover 54 from beneath the cover 54.

The cover 54 supports the plants 28_{P1}, 28_{P2}, 28_{P3}, 28_{P4}, 28_{P5} ... and 28_{Pn}, which are a predetermined number of different strains of the same species, via respective plant fixing stoppers 54a serving as pads, which will be described later, so that tips 28b of taproots 28a of the plants are immersed in the nutrient solution LQ1 in the respective cultivation containers 50B1, 50B2, 50B3, 50B4 and SOBS. For example, as shown in PTL 1, the plant fixing stoppers 54a are arranged at positions corresponding to openings of the cover 54. The plurality of openings of the cover 54 are formed in a matrix at predetermined intervals. For example, as shown in PTL 1, the plant fixing stoppers 54a each include, on the inside thereof, a seal holder in which a plurality of sealing members are held being overlaid with each other. The plant fixing stoppers 14a may be members, such as urethane sponge mats, having flexibility and stretchability. Thus, shoots 28c of the plants 28_{P1}, 28_{P2}, 28_{P3}, 28_{P4} and 28_{P5} can be supported in the cover 54 by the respective plant fixing stoppers 54a.

As shown in Fig. 6C, the cover support 50C has a growth space 50A on the inside thereof for holding dilating portions 48c in the roots of grown plants 48_{P1}, 48_{P2}, 48_{P3}, 48_{P4} and 48_{P5}. For example, the growth space (air layer) 50A has a height HA exceeding the length in the elongation growth direction of the dilating portions 48c in the roots of the grown plants 48_{P1}, 48_{P2}, 48_{P3}, 48_{P4} and 48_{P5} at the time of harvest. For example, in the case of Japanese radishes, the height HA is set to 50 cm or more. It should be noted that, without being limited to the example mentioned above, the height HA may be set to a predetermined height of less than 50 cm depending on the lengths in the elongation growth direction of the dilating portions in the roots of grown plants of different species at the time of harvest. For example, in the case of carrots, the height HA may be set to a value in the range of about 20 cm or more and 30 cm or less.

The pump 12P in the tank 12, which serves as a nutrient solution storage, is controlled by a control unit, not shown. As a basis for the control, the control unit uses a detection output signal derived from a liquid level sensor LS provided in a sub-tank 50T. For example, the liquid level sensor LS includes three level-detection terminals having different lengths. Thus, when the liquid level in the sub-tank 50T has been detected by the middle-length level-detection terminal and has lowered to a predetermined lower limit or less, the pump 12P is activated. When the pump 12P is activated, the nutrient solution LQ1 in the tank 12 is supplied to a reservoir of the sub-tank 50T through the supply path Du2. In this case, when the liquid level in the sub-tank 50T has been detected by the shortest level-detection terminal and has reached a predetermined upper limit, the control unit deactivates the pump 12P based on the detection output signal derived from the liquid level sensor LS. It should be noted that the longest level-detection terminal serves as a common terminal.

The cultivation containers 50B 1, 50B2, 50B3, 50B4 and 50B5 have reservoirs which are ensured to communicate with each other via respective communication paths 50P. The cultivation container SOBS has a reservoir which is ensured to communicate with the sub-tank 50T via a communication path 50P. The reservoirs respectively have tops that are open to the growth space 50A mentioned above. The other end of the supply path Du2 is open to the surface of the nutrient solution LQ1 in the reservoir of the sub-tank 50T. Accordingly, the liquid level of the nutrient solution LQ1 in the reservoirs of the cultivation containers 50B1, 50B2, 50B3, 50B4 and 50B5 is controlled according to the liquid level in the sub-tank 50T.

With this configuration, the plants 28_{P1}, 28_{P2}, 28_{P3}, 28_{P4}, 28_{P5} ... and 28_{Pn} arranged in the cultivation planter 50 gradually grow. With the growth, as shown in Fig. 6B, dilating portions 38c in the roots grow even more than the shoots 28c. This growth is considered to be due to drought stress in the growth space (air layer) 50A.

Plants 38_{P1}, 38_{P2}, 38_{P3}, 38_{P4}, 38_{P5} ... and 38_{Pn} have grown leaves 38d above the dilating portions 38c in the roots and elongated taproots 38a below the dilating portions 38c in the roots. Tips 38b of the taproots 38a are immersed in the nutrient solution LQ1.

The plants 38_{P1}, 38_{P2}, 38_{P3}, 38_{P4}, 38_{P5} ... and 38_{Pn}, when they have grown even more and are going to be harvested, will have dilating portions 48c in the roots with diameters and lengths, as shown in Fig. 6C, which are larger than those of the dilating portions 38c in the roots mentioned above. Plants 48_{P1}, 48_{P2}, 48_{P3}, 48_{P4}, 48_{P5} ... and 48_{Pn} have grown leaves 48d above the dilating portions 48c in the roots and elongated taproots 48a below the dilating portions 48c of the roots. Tips 48b of the taproots 48a are immersed in the nutrient solution LQ1. In this way, no drain is required and the amount of nutrient solution required can be greatly reduced.

Thus, in the hydroponics device according to the above example, plants are cultivated by separating the elongation growth of the roots of the plants from the thickening growth of the roots. Accordingly, at the seedling stage where the plants are lightweight and can be cultivated in a small space, it is easy to efficiently grow long seedlings without using a large tank. At the stage where the roots of the plants dilate, increase in weight and are difficult to transfer, only the tips of the roots of the plants have to be immersed in a small quantity of nutrient solution. Thus, if only a suitable space is available, cultivation of root vegetables can be realized. There is no need for a large tank or means for holding a large quantity of liquid. Moreover, since no liquid level control means (container transfer means) is required to be used, and since multistage cultivation is facilitated, productivity per unit area is enhanced. For example, root vegetables can be sufficiently cultivated using hydroponics devices which are used for cultivation of leafy vegetables (lettuce) with liquid 3 cm deep. Therefore, there is no need for newly developing hydroponics devices dedicated to root vegetables. It has been considered that a large tank and a large quantity of liquid are indispensable for cultivation of root vegetables. However, they are no longer necessary. Root vegetables, such as medical plants (for use as Chinese medicines or herbal medicines), store active ingredients in the roots. Therefore, besides usage as food, root vegetables are expected to be grown for the purpose of using such active ingredients stored in the roots as products. Development of a low-cost cultivation method can contribute to providing chemical-free root vegetables which ensure stable content of active ingredients due to control of cultivation environments.

The scope of protection of the current invention is defined by the appended claims.

### [Reference Signs List]

10, 50 ... Planter
10B ... Pan
10C ... Cover support
12 ... Tank
14 ... Cover
16 ... Discharge pipe
28_{P1}, 28_{P2}, 28_{P3}, 28_{P4}, 28_{P5} ... Plant
38_{P1}, 38_{P2}, 38_{P3}, 38_{P4}, 38_{P5} ... Plant
42, 48 ... Delivery channel
48_{P1}, 48_{P2}, 48_{P3}, 48_{P4}, 48_{P5} ... Plant
50B1, 50B2, 50B3, 50B4, 50B5 ... Cultivation container

## Claims

1. A hydroponics device comprising:
a nutrient solution storage (12) in which a nutrient solution (LQ1) is stored;
a nutrient solution reservoir container (10B) into which the nutrient solution (LQ1) is supplied from the nutrient solution storage; and
a cover (14) that supports a plurality of plants (28_{P1}, 28_{P2}, 28_{P3}, 28_{P4}, 28_{P5}) to be cultivated, the cover (14) being fixedly spaced from a liquid surface of the nutrient solution (LQ1) in the nutrient solution reservoir container (10B), with a predetermined distance being ensured between the cover (14) and the liquid surface, **characterised in that**:
the plants supported by the cover (14) respectively have taproots (28a) which are longer than the lengths of shoots (28c) of the plants, the taproots (28a) having respective tips (28b), which respectively include rootcaps and apical meristems, wherein only the tips (28B) are immersed in the nutrient solution (LQ1) in the nutrient solution reservoir container (10B);
the device includes an air layer (10A) that is formed between the cover (14) and the liquid surface of the nutrient solution (LQ1) in the nutrient solution reservoir container (10B) so as to surround the taproots (28a) except for the tips (28b) of the taproots (28a), and wherein the air layer (10A) has a predetermined height (HA).

2. The hydroponics device according to claim 1, **characterized in that** the nutrient solution reservoir container is a pan.

3. The hydroponics device according to claim 1, **characterized in that** the nutrient solution reservoir container is a delivery channel.

4. The hydroponics device according to claim 1, **characterized in that** the nutrient solution reservoir container is a stand-alone cultivation container provided for plants.

5. The hydroponics device according to claim 1, **characterized in that** the plants have respective dilating portions in roots, the dilating portions being formed in a space between the cover and the nutrient solution reservoir container.

6. The hydroponics device according to claim 1, **characterized in that** the air layer between the cover and the nutrient solution reservoir container is enclosed by a transparent or translucent sheet.

7. The hydroponics device according to claim 1, **characterized in that** the air layer between the cover and the nutrient solution reservoir container is enclosed by a sheet.

8. The hydroponics device according to claim 1, **characterized in that** a distance between the cover and the liquid surface of the nutrient solution in the nutrient solution reservoir container is controllable to a desired length according to growth of the taproots.

9. A hydroponics method **characterized in that** the method comprises steps of:
cultivating plants : (28_{P1}, 28_{P2}, 28_{P3}, 28_{P4}, 28_{P5}) in a first nutrient solution reservoir container, the plants having taproots (28a) which are longer than the lengths of respective shoots (28c) of the plants;
growing the plants, cultivated in the first nutrient solution reservoir container, in a second nutrient solution reservoir container in which an air layer (10A) is formed around portions of the taproots (28a) of the respective plants except for tips (28b) of the taproots (28a), which respectively include rootcaps and apical meristems, wherein the air layer (10A) has a predetermined height (HA), and
wherein only the tips (28b) of the taproots (28a) of the respective plants are immersed in the nutrient solution in the first nutrient solution reservoir container and the second nutrient solution reservoir container.

10. The hydroponics method according to claim 9, **characterized in that**, in the step of cultivating plants in a first nutrient solution reservoir container, the plants having taproots which are longer than the lengths of respective shoots of the plants, only the tips of the taproots of the plants are immersed in the nutrient solution in the first nutrient solution reservoir container according to growth of the taproots.

## Patentansprüche

1. Hydrokultur-Vorrichtung, umfassend:
einen Nährstofflösung-Speicher (12), in welchem eine Nährstofflösung (LQ1) gespeichert ist;
einen Nährstofflösung-Vorratsbehälter (10B), in welchen die Nährstofflösung (LQ1) von dem Nährstofflösung-Speicher geliefert wird; und
eine Abdeckung (14), welche eine Mehrzahl von Pflanzen (28_{P1}, 28_{P2}, 28_{P3}, 28_{P4}, 28_{P5}) trägt, welche zu kultivieren sind, wobei die Abdeckung (14) fest von einer Flüssigkeitsoberfläche der Nährstofflösung (LQ1) in dem Nährstofflösung-Vorratsbehälter (10B) beabstandet ist, wobei eine vorbestimmte Distanz zwischen der Abdeckung (14) und der Flüssigkeitsoberfläche sichergestellt ist, **dadurch gekennzeichnet, dass**:
die von der Abdeckung (14) getragenen Pflanzen jeweils Pfahlwurzeln (28a) aufweisen, welche länger als die Längen von Trieben (28c) der Pflanzen sind,
wobei die Pfahlwurzeln (28a) jeweilige Spitzen (28b) aufweisen, welche jeweils Wurzelhauben und apikale Meristeme umfassen, wobei lediglich die Spitzen (28B) in die Nährstofflösung (LQ1) in dem Nährstofflösung-Vorratsbehälter (10B) eingetaucht sind;
die Vorrichtung eine Luftschicht (10A) umfasst, welche zwischen der Abdeckung (14) und der Flüssigkeitsoberfläche der Nährstofflösung (LQ1) in dem Nährstofflösung-Vorratsbehälter (10B) gebildet ist, um so die Pfahlwurzeln (28a) außer den Spitzen (28b) der Pfahlwurzeln (28a) zu umgeben, und
wobei die Luftschicht (10A) eine vorbestimmte Höhe (HA) aufweist.

2. Hydrokultur-Vorrichtung nach Anspruch 1, **dadurch gekennzeichnet, dass** der Nährstofflösung-Vorratsbehälter eine Pfanne ist.

3. Hydrokultur-Vorrichtung nach Anspruch 1, **dadurch gekennzeichnet, dass** der Nährstofflösung-Vorratsbehälter ein Lieferkanal ist.

4. Hydrokultur-Vorrichtung nach Anspruch 1, **dadurch gekennzeichnet, dass** der Nährstofflösung-Vorratsbehälter ein eigenständiger Kultivierungsbehälter ist, welcher für Pflanzen bereitgestellt ist.

5. Hydrokultur-Vorrichtung nach Anspruch 1, **dadurch gekennzeichnet, dass** die Pflanzen jeweilige sich aufweitende Abschnitte in Wurzeln aufweisen, wobei die sich aufweitenden Abschnitte in einem Raum zwischen der Abdeckung und dem Nährstofflösung-Vorratsbehälter gebildet sind.

6. Hydrokultur-Vorrichtung nach Anspruch 1, **dadurch gekennzeichnet, dass** die Luftschicht zwischen der Abdeckung und dem Nährstofflösung-Vorratsbehälter durch eine transparente oder lichtdurchlässige Bahn umschlossen ist.

7. Hydrokultur-Vorrichtung nach Anspruch 1, **dadurch gekennzeichnet, dass** die Luftschicht zwischen der Abdeckung und dem Nährstofflösung-Vorratsbehälter durch eine Bahn umschlossen ist.

8. Hydrokultur-Vorrichtung nach Anspruch 1, **dadurch gekennzeichnet, dass** eine Distanz zwischen der Abdeckung und der Flüssigkeitsoberfläche der Nährstofflösung in dem Nährstofflösung-Vorratsbehälter auf eine gewünschte Länge gemäß einem Wachstum der Pfahlwurzeln steuerbar ist.

9. Hydrokultur-Verfahren, **dadurch gekennzeichnet, dass** das Verfahren die Schritte umfasst:
Kultivieren von Pflanzen (28_{P1}, 28_{P2}, 28_{P3}, 28_{P4}, 28_{P5}) in einem ersten Nährstofflösung-Vorratsbehälter, wobei die Pflanzen Pfahlwurzeln (28a) aufweisen, welche länger als die Längen von entsprechenden Trieben (28c) der Pflanzen sind;
Aufziehen der Pflanzen, welche in dem ersten Nährstofflösung-Vorratsbehälter kultiviert werden, in einem zweiten Nährstofflösung-Vorratsbehälter, in welchem eine Luftschicht (10A) um Abschnitte der Pfahlwurzeln (28a) der entsprechenden Pflanzen, außer Spitzen (28b) der Pfahlwurzeln (28a), herum gebildet ist, welche jeweils Wurzelhauben und apikale Meristeme umfassen, wobei die Luftschicht (10A) eine vorbestimmte Höhe (HA) aufweist, und
wobei lediglich die Spitzen (28b) der Pfahlwurzeln (28a) der entsprechenden Pflanzen in der Nährstofflösung in dem ersten Nährstofflösung-Vorratsbehälter und dem zweiten Nährstofflösung-Vorratsbehälter eingetaucht sind.

10. Hydrokultur-Verfahren nach Anspruch 9, **dadurch gekennzeichnet, dass** in dem Schritt des Kultivierens von Pflanzen in einem ersten Nährstofflösung-Vorratsbehälter die Pflanzen Pfahlwurzeln aufweisen, welche länger als die Längen von entsprechenden Trieben der Pflanzen sind, wobei lediglich die Spitzen der Pfahlwurzeln der Pflanzen in der Nährstofflösung in dem ersten Nährstofflösung-Vorratsbehälter gemäß einem Wachstum der Pfahlwurzeln eingetaucht sind.

## Revendications

1. Dispositif hydroponique comprenant :
un stockage de solution nutritive (12) dans lequel une solution nutritive (LQ1) est stockée ;
un récipient réservoir de solution nutritive (10B) dans lequel est fournie la solution nutritive (LQ1) à partir du stockage de solution nutritive ; et
un couvercle (14) qui supporte une pluralité de végétaux (28_{P1}, 28_{P2}, 28_{P3}, 28_{P4}, 28_{P5}) à cultiver, le couvercle (14) étant espacé de manière fixe par rapport à une surface liquide de la solution nutritive (LQ1) dans le récipient réservoir de solution nutritive (10B), une distance prédéterminée étant assurée entre le couvercle (14) et la surface liquide, **caractérisé en ce que** :
les végétaux supportés par le couvercle (14) ont respectivement des racines pivotantes (28a) qui sont plus longues que les longueurs de pousses (28c) des végétaux, les racines pivotantes (28a) ayant des pointes respectives (28b), qui comportent respectivement des coiffes et des méristèmes apicaux, dans lequel seules les pointes (28B) sont immergées dans la solution nutritive (LQ1) dans le récipient réservoir de solution nutritive (10B) ;
le dispositif comporte une couche d'air (10A) qui est formée entre le couvercle (14) et la surface liquide de la solution nutritive (LQ1) dans le récipient réservoir de solution nutritive (10B) de manière à entourer les racines pivotantes (28a) à l'exception des pointes (28b) des racines pivotantes (28a), et dans lequel la couche d'air (10A) a une hauteur prédéterminée (HA).

2. Dispositif hydroponique selon la revendication 1, **caractérisé en ce que** le récipient réservoir de solution nutritive est un bac.

3. Dispositif hydroponique selon la revendication 1, **caractérisé en ce que** le récipient réservoir de solution nutritive est un canal de distribution.

4. Dispositif hydroponique selon la revendication 1, **caractérisé en ce que** le récipient réservoir de solution nutritive est un récipient de culture autonome prévu pour des végétaux.

5. Dispositif hydroponique selon la revendication 1, **caractérisé en ce que** les végétaux présentent des portions dilatées respectives dans des racines, les portions dilatées étant formées dans un espace entre le couvercle et le récipient réservoir de solution nutritive.

6. Dispositif hydroponique selon la revendication 1, **caractérisé en ce que** la couche d'air entre le couvercle et le récipient réservoir de solution nutritive est entourée par une feuille transparente ou translucide.

7. Dispositif hydroponique selon la revendication 1, **caractérisé en ce que** la couche d'air entre le couvercle et le récipient réservoir de solution nutritive est entourée par une feuille.

8. Dispositif hydroponique selon la revendication 1, **caractérisé en ce qu'**une distance entre le couvercle et la surface liquide de la solution nutritive dans le récipient réservoir de solution nutritive peut être commandée à une longueur souhaitée en fonction de la croissance des racines pivotantes.

9. Procédé hydroponique **caractérisé en ce que** le procédé comprend les étapes consistant à :
cultiver des végétaux (28_{P1}, 28_{P2}, 28_{P3}, 28_{P4}, 28_{P5}) dans un premier récipient réservoir de solution nutritive, les végétaux ayant des racines pivotantes (28a) qui sont plus longues que les longueurs de pousses respectifs (28c) des végétaux ;
faire croître les végétaux, cultivés dans le premier récipient réservoir de solution nutritive, dans un second récipient réservoir de solution nutritive dans lequel une couche d'air (10A) est formée autour de parties des racines pivotantes (28a) des végétaux respectifs à l'exception des pointes (28b) des racines pivotantes (28a), qui comportent respectivement des coiffes et des méristèmes apicaux, dans lequel la couche d'air (10A) a une hauteur prédéterminée (HA), et dans lequel seules les pointes (28b) des racines pivotantes (28a) des végétaux respectifs sont immergées dans la solution nutritive dans le premier récipient réservoir de solution nutritive et le second récipient réservoir de solution nutritive.

10. Procédé hydroponique selon la revendication 9, **caractérisé en ce que**, lors de l'étape de culture de végétaux dans un premier récipient réservoir de solution nutritive, les végétaux ayant des racines pivotantes qui sont plus longues que les longueurs de pousses respectifs des végétaux, seules les pointes des racines pivotantes des végétaux sont immergées dans la solution nutritive dans le premier récipient réservoir de solution nutritive en fonction de la croissance des racines pivotantes.
